# EUROPEAN PATENT APPLICATION

(11) **EP 4 170 975 A1**
(43) Date of publication of application: **26.04.2023**
(21) Application number: 21830013.5
(22) Date of filing: 22.06.2021
(51) Int. Cl.: H04L 12/24

(54) **TREE MODEL CONSTRUCTION METHOD, APPARATUS AND DEVICE, AND STORAGE MEDIUM**

(30) Priority: 24.06.2020 CN 202010592638
(71) Applicant: ZTE Corporation, Shenzhen, Guangdong 518057 (CN)
(72) Inventor: JIANG, Lei, Shenzhen, Guangdong 518057 (CN); SHEN, Shanhong, Shenzhen, Guangdong 518057 (CN); ZHOU, Bo, Shenzhen, Guangdong 518057 (CN); DU, Jiaqiang, Shenzhen, Guangdong 518057 (CN)
(74) Representative: Savi, Massimiliano
(86) International application number: PCT/CN2021/101572
(87) International publication number: WO 2021/259273

(57) **Abstract**

A tree model construction method, apparatus and device, and a storage medium. The method comprises: preprocessing alarm data to obtain a vectorized alarm association relationship set (S101); carrying out normalization processing on first features of alarm association relationships in the vectorized alarm association relationship set(S102); according to the vectorized alarm association relationship set, the first features subjected to the normalization processing, and a trained classification model, determining labels of alarm data in the set (S103); and constructing a tree model according to the labels of the alarm data in the set (S104).

## Description

### CROSS-REFERENCE TO RELATED APPLICATION

This application is filed on the basis of Chinese patent application 202010592638.4 filed June 24, 2020, and claims priority to the Chinese patent application, the entire contents of which are incorporated herein by reference.

### TECHNICAL FIELD

The present disclosure relates to the field of data analysis and processing, in particular to a tree model building method and apparatus, a device and a storage medium.

### BACKGROUND

In the field of communication, communication equipment often generates a large number of alarms, some which have correlations that can be determined by topological links, service relationships, network relationships, alarm levels, etc. In new network scenarios such as the 5th-Generation Mobile Communication Technology (5G), etc., the topology relationships and services relationship have also changed, so the effectiveness of traditional methods for auxiliary determining root-cause relationships of alarms based on topological links is greatly reduced.

A current solution is to express alarm correlations by means of knowledge graph iterating and updating. Common knowledge graph updating methods include a comprehensive updating method and an incremental updating method. However, the comprehensive updating method consumes a lot of resources, and the incremental updating method requires semi-automatic and semi-manual intervention, which requires a large workload.

### SUMMARY

Embodiments of the present disclosure provide a tree model building method and apparatus, a device and a storage medium.

In view of the above, an embodiment of the present disclosure provides a tree model building method. The method includes: preprocessing alarm data to obtain a vectorized alarm correlation set; normalizing a first feature of each alarm correlation in the vectorized alarm correlation set; determining a label of each alarm data in the set according to the vectorized alarm correlation set, the normalized first feature and a classification model, where the classification model is obtained through training; and building a tree model according to the label of each alarm data in the set.

An embodiment of the present disclosure further provides a tree model building apparatus. The apparatus includes: a processing module configured to preprocess alarm data to obtain a vectorized alarm correlation set, and further configured to normalize a first feature of each alarm correlation in the vectorized alarm correlation set; a determination module configured to determine a label of each alarm data in the set according to the vectorized alarm correlation set, the normalized first feature and a classification model, where the classification model is obtained through training; and a building module configured to build a tree model according to the label of each alarm data in the set.

An embodiment of the present disclosure further provides a device. The device includes a memory, a processor, a program stored in the memory and executable by the processor, and a data bus configured to implement connection and communication between the processor and the memory, where the program, when executed by the processor, causes the processor to implement the method described above.

The present disclosure provides a readable/writable storage medium configured for computer storage, where the storage medium stores one or more programs which, when executed by one or more processors, cause the one or more processors to implement the method described above.

### BRIEF DESCRIPTION OF DRAWINGS

Fig. 1 is a flowchart of a tree model building method provided by an embodiment of the present disclosure.
Fig. 2 is a schematic diagram of one-hot encoding provided by an embodiment of the present disclosure.
Fig. 3 is a schematic diagram of a storage mode of alarm correlations after one-hot encoding provided by an embodiment of the present disclosure.
Fig. 4 is a flowchart of a method for determining a label of each alarm data provided by an embodiment of the present disclosure.
Fig. 5 is a schematic diagram of a sub-tree model provided by an embodiment of the present disclosure.
Fig. 6 is a schematic diagram of a sub-tree model provided by an embodiment of the present disclosure.
Fig. 7 is a schematic diagram of a sub-tree model provided by an embodiment of the present disclosure.
Fig. 8 is a schematic diagram of a tree model provided by an embodiment of the present disclosure.
Fig. 9 is a schematic structural diagram of a tree model building apparatus provided by an embodiment of the present disclosure.
Fig. 10 is a schematic structural diagram of a device provided by an embodiment of the present disclosure.

### DETAILED DESCRIPTION

In order to make the objects, technical schemes and advantages of the present disclosure clear, embodiments of the present disclosure will be described in detail with reference to the drawings. It should be noted that the embodiments in the present disclosure and the features in the embodiments may be arbitrarily combined with each other without conflict.

In addition, in the embodiments of the present disclosure, terms such as "optionally" or "exemplarily", and the like are used to represent examples, instances or explanations. Any embodiment or design scheme described as "optionally" or "exemplarily" in the embodiments of present disclosure should not be interpreted as more preferable or advantageous than other embodiments or design schemes. Rather, the use of terms such as "optionally" or "exemplarily", and the like is intended to present related concepts in a specific manner.

In order to understand the schemes provided by the embodiments of the present disclosure, some concepts related to the present disclosure are exemplarily illustrated below for reference.

Primary-secondary relationship: under the same topology relationship, an optical port receiving link fault leads to a Remote Radio Unit (RRU) link disconnection, under the same topology relationship and service relationship, the RRU link disconnection leads to out of service of a Long-Term Evolution cell (abbreviated as LTE cell out of service). Assuming that alarms of the LTE cell out of service and the RRU link disconnection occur within 10 minutes, the LTE cell out of service may be taken as a primary alarm, and the RRU link disconnection may be taken as a secondary alarm, so that there is a primary-secondary relationship between the two alarms.

Homologous relationship: the same fault causes multiple alarms generated by the same network element to be correlated, or the same fault causes multiple alarms generated by multiple network elements connected in the same network to be correlated, or the same fault causes multiple alarms involving multiple network s to be correlated. For example, if a certain network element goes down, alarms "destination signaling point unreachable" from other network elements to this network element may be homologously correlated.

Parent-child relationship: it indicates a primary-secondary relationship of correlated alarm in a tree model. In the primary-secondary relationship, the primary alarm is taken as a parent alarm, and the child alarm is unchanged, that is, the primary-secondary relationship is transformed into a parent-child relationship in the tree model. In the homologous relationship, the root alarm may be taken as a parent alarm, and other alarms may be taken as child alarms, so the homologous relationship may be transformed into the parent-child relationship in the tree model.

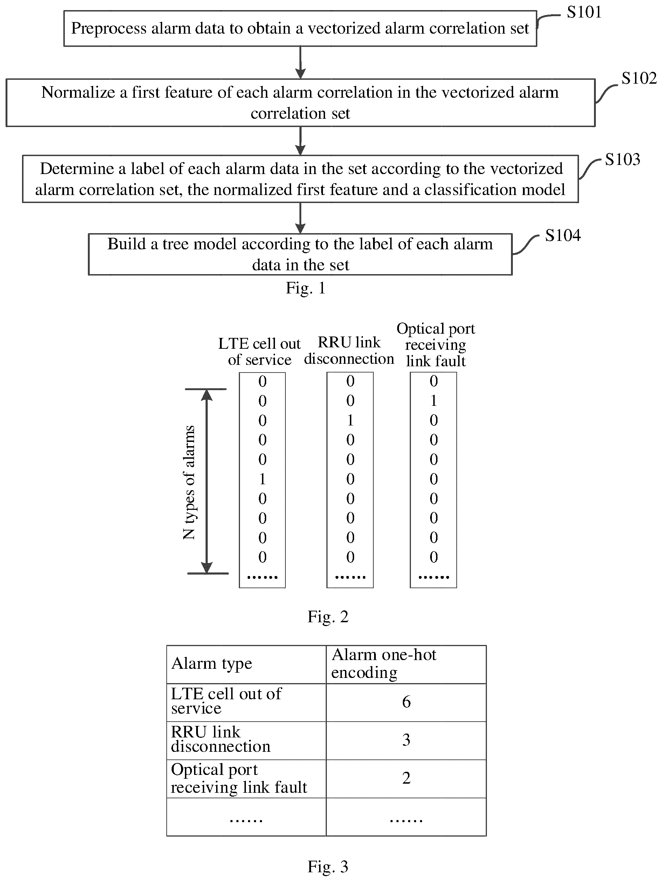

On the basis of the above concepts, an embodiment of the present disclosure provides a tree model building method. As shown in Fig. 1, the method includes following steps S101 to S104.

At S101, alarm data is preprocessed to obtain a vectorized alarm correlation set.

For a large number of alarms generated due to various reasons existing in a wireless network, because some alarms may not serve as reference for the correlation of other alarms, the alarm data may be preprocessed through data cleaning.

In some examples, an implementation of preprocessing alarm data provided by an embodiment of the present disclosure may be as follows: the alarm data is mined to obtain an alarm correlation alternative set, so as to implement the process of alarm data cleaning. In the embodiment of the present disclosure, the alarm data in the alarm correlation alternative set obtained by mining may be one-hot encoded, and then the one-hot encoded alarm data is used as input to train an alarm vector neural network, to obtain a vectorized alarm correlation set.

In some examples, an Apriori algorithm, an FP Growth algorithm, an FPMAX algorithm, and the like may be adopted for alarm mining in the above-mentioned process of alarm data preprocessing, and Skip-gram and other network models may be adopted for the alarm vector neural network.

At S102, a first feature of each alarm correlation in the vectorized alarm correlation set is normalized.

In some examples, the first feature in this step may include at least one of an alarm topology relationship, an alarm service relationship, an alarm level, an alarm network relationship, an alarm cosine similarity, an alarm support, or an alarm confidence.

In some examples, in the case where the first feature includes at least one of an alarm topology relationship, an alarm service relationship, an alarm level or an alarm network relationship, at least one of the alarm topology relationship, the alarm service relationship, the alarm level or the alarm network relationship of each alarm correlation may be normalized according to an actual network structure. For example, in the actual network structure, assuming that alarm A and alarm B occur in a Building Base Band Unit (BBU) and a base station respectively, the topology relationship is taken as an example for normalization. Assuming that A is a parent alarm of B and B is not a parent alarm of A, a dimension that A is the parent alarm of B may be marked as 0, and a dimension that B is not the parent alarm of A may be marked as 1.

Similarly, the alarm network relationship, the alarm service relationship and the alarm level may also be normalized according to the actual network structure, where a normalization value of the alarm level may be an actual alarm level value.

In the case where the first feature includes at least one of an alarm support, an alarm confidence or an alarm cosine similarity, at least one of the alarm support, the alarm confidence or the alarm cosine similarity of each alarm correlation may be normalized according to a normalization threshold. For example, taking the alarm cosine similarity as an example, assuming that the cosine similarity between alarm A and alarm B is 0.9, if a cosine similarity normalization threshold is 0.7, that is, if the cosine similarity between alarm A and alarm B is greater than a corresponding cosine similarity normalization threshold, the dimension may be set to 1; otherwise, if the cosine similarity between alarm A and alarm B is less than the corresponding cosine similarity normalization threshold, the dimension may be set to 0.

The cosine similarity between alarm data A and alarm data B may be obtained by the alarm vector neural network in S101, and the alarm support and alarm confidence may be obtained in the process of alarm data mining.

It should be noted that the above alarm support, alarm confidence and alarm cosine similarity may respectively correspond to corresponding normalization thresholds. For example, taking the alarm confidence as an example, this feature may be normalized according to a normalization threshold corresponding to the alarm confidence. Of course, normalization thresholds corresponding to different first features may be identical, which is not limited in the embodiments of the present disclosure.

It can be understood that in the case where the first feature includes at least one of an alarm topology relationship, an alarm service relationship, an alarm level or an alarm network relationship, and at least one of an alarm support, an alarm confidence or an alarm cosine similarity, corresponding first features may be normalized in the above two ways.

At S103, a label of each alarm data in the set is determined according to the vectorized alarm correlation set, the normalized first feature and a classification model.

The classification model may be obtained by machine learning training, for example, training and optimization through training data and test data. The training data and the test data may be selected according to a time period in which alarms occur continuously. Of course, when training the classification model, frequent itemset mining may be performed on the training data and the test data by means of a mining algorithm in advance to narrow a data range.

In some examples, in the process of training the classification model based on the training data and the test data, a learning effect of the classification model may be evaluated. For example, if a network model has a classification accuracy less than 80% after a certain evaluation based on the test data, the network model may be optimized and relearned by adjusting parameters.

In some examples, adjusting parameters may include the following two situations: first, training data is redesigned, for example, the training data is too little and easy to be over-fitted; second, regularization is redefined, for example, the training data has a good training result, but the accuracy of test result of the test data is poor.

After the classification model is obtained through training according to the training data and the test data, classification and learning may be performed based on the classification model in conjunction with the vectorized alarm correlation set and the normalized first feature obtained in S101 and S102 to determine the label of each alarm data in the vectorized alarm correlation set.

The label of the alarm data may indicate that the alarm data is a parent node or a child node.

Note that a common machine learning classification model such as logistic regression or SVM may be adopted as the above classification model.

At S104, a tree model is built according to the label of each alarm data in the set.

After the label of each alarm data in the vectorized alarm correlation set is obtained through the above step, that is, after it is determined that the alarm data is a parent node or a child node, a tree model may be built according to the label of the alarm data.

In some examples, in the case of an existing knowledge graph (hereinafter referred to as an original tree model), in this step, a sub-tree model may be built according to the label of each alarm data, and the built sub-tree model may be integrated into the original tree model to build a new tree model. In this way, based on the tree model, correlations among the alarms can be easily and quickly found, and a continuous growth of the tree model can be achieved dynamically.

An embodiment of the present disclosure provides a tree model building method. The method includes: preprocessing alarm data to obtain a vectorized alarm correlation set; normalizing a first feature of each alarm correlation in the vectorized alarm correlation set; determining a label of each alarm data in the set according to the vectorized alarm correlation set, the normalized first feature and a classification model obtained through training; and building a tree model according to the label of each alarm data in the set. In this way, a primary-secondary relationship between correlated alarms can be expressed through the tree model, and the alarm data can be learned and analyzed based on the classification model obtained through training, to generate a corresponding tree model dynamically, so as to achieve the continuous growth of the tree model.

As shown in Fig. 2, in an embodiment, in the process of preprocessing the alarm data in S101, when the alarm data is one-hot encoded, only a corresponding alarm dimension may be set to 1, and the other dimensions may be set to 0. That is, when one-hot encoding is adopted in all the mined n types of alarms that may be correlated, only one alarm is set to 1, and all other correlated alarms are set to 0. Accordingly, when data is saved, for example, when an alarm correlation after one-hot encoding is saved in a database, a design may be made according to a dimension of the position where the alarm is 1. As shown in Fig. 3, since the position where LTE cell out of service is 1 in Fig. 2 is 6, the one-hot encoding corresponding to the LTE cell out of service is 6; since the position where RRU link disconnection is 1 in Fig. 2 is 3, the one-hot encoding corresponding to the RRU link disconnection is 3; and since the position where optical port receiving link fault is 1 in Fig. 2 is 2, the one-hot encoding corresponding to the optical port receiving link fault is 2.

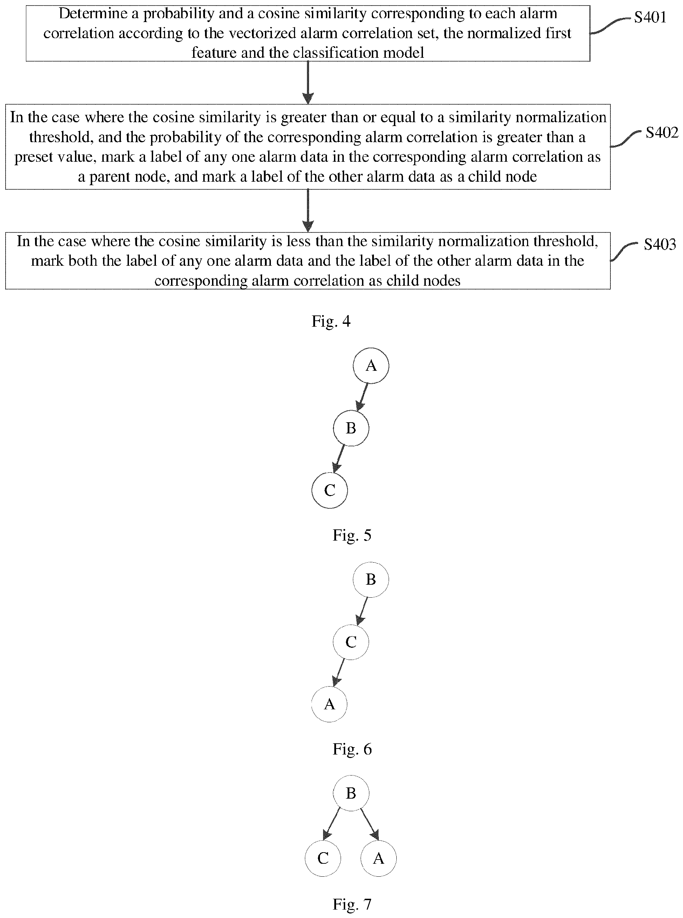

As shown in Fig. 4, in an embodiment, an implementation of determining the label of each alarm data in the vectorized alarm correlation set in S103 may include, but is not limited to, the following steps S401 to S402.

At S401, a probability and a cosine similarity corresponding to each alarm correlation are determined according to the vectorized alarm correlation set, the normalized first feature and the classification model.

The probability in this step may be configured to indicate the probability that any one alarm data is a parent node of the other alarm data in a corresponding correlation, and the cosine similarity may be configured to indicate a magnitude of correlation between any one alarm data and the other alarm data in the corresponding alarm correlation. For example, the cosine similarity between every two alarm data in the vectorized alarm correlation set is calculated through vectorization training by the alarm vector neural network, and the probability that any one alarm data is a parent node of the other alarm data is calculated by means of a Sigmoid function in a logistic regression classification model.

At S402, in the case where the cosine similarity is greater than or equal to a similarity normalization threshold, and the probability of the corresponding alarm correlation is greater than a preset value, a label of any one alarm data in the corresponding alarm correlation is marked as a parent node, and a label of the other alarm data is marked as a child node.

In some examples, assuming that the similarity normalization threshold is 0.5, if the calculated cosine similarity between alarm data A and alarm data B is 0.9, which is larger than the similarity normalization threshold, it is determined that there is a strong correlation between alarm data A and alarm data B. Accordingly, if the probability that alarm data A is a parent node of alarm data B is 0.83, which is greater than a preset value of 0.45, a label of alarm data A is marked as a parent node, and a label of alarm data B is marked as a child node.

At S403, in the case where the cosine similarity is less than the similarity normalization threshold, the label of any one alarm data and the label of the other alarm data in the corresponding alarm correlation are both marked as child nodes.

Similarly, assuming that the similarity normalization threshold is 0.5, if the cosine similarity between alarm data A and alarm data B calculated based on the classification model is 0.35, which is smaller than the similarity normalization threshold, it is determined that there is no strong correlation between alarm data A and alarm data B. Therefore, the label of alarm data A and the label of alarm data B may both be marked as child nodes.

It can be understood that there is only one parent node at the top of the tree model. Because there is no strong correlation between alarm data A and alarm data B, the two data can't be parent nodes at the top of the tree model at the same time. Even though alarm data A and alarm data B may be parent nodes of other nodes respectively, alarm data A and alarm data B must also be child nodes of other nodes. Therefore, the labels of alarm data A and alarm data B which have no strong correlation may both be marked as child nodes.

In an embodiment, the tree model built according to the label of each alarm data in the set in S104 may include the following different situations.

In the case where the labels of the alarm data are not in conflict, a sub-tree model is built according to the label of each alarm data. For example, assuming that, of alarm data A and alarm data B, alarm data A is a parent node and alarm data B is a child node, and of alarm data B and alarm data C, alarm data B is a parent node and alarm data C is a child node, that is, alarm data A is a parent node of alarm data B and alarm data B is a parent node of alarm data C, then the sub-tree model shown in Fig. 5 may be built based on the labels of alarm data A, alarm data B and alarm data C.

In the case where the labels of the alarm data are in conflict, the label of each alarm data is updated according to the probability corresponding to the alarm correlation to which each alarm data belongs, and a sub-tree model is built according to the updated label of each alarm data. For example, assuming that, of alarm data A and alarm data B, alarm data A is a parent node and alarm data B is a child node, of alarm data B and alarm data C, alarm data B is a parent node and alarm data C is a child node, of alarm data A and alarm data C, alarm data C is a parent node and alarm data A is a child node, that is, the labels of alarm data A, alarm data B and alarm data C are in conflict and thus the sub-tree model cannot be formed, and the label of each alarm data may be updated based on the probability corresponding to the alarm correlation to which each alarm data belongs. Assuming that the probability that alarm data A is a parent node of alarm data B is 53% in the alarm correlation of A and B, the probability that alarm data B is a parent node of alarm data C is 85% in the alarm correlation of B and C, and the probability that the alarm data C is a parent node of alarm data A is 75% in the alarm correlation of A and C, an alarm correlation with a probability close to 50% may be selected, namely, the alarm correlation of A and B, and the probability that alarm data B is a parent node of alarm data A may be updated to 47%. Then, of alarm data A and alarm data B, a label of alarm data A may be updated as a child node, and a label of alarm data B may be updated as a parent node, that is, the updated labels of all alarm data are as follows: alarm data B is a parent node of C, and alarm data C is a parent node of alarm data A, so that the sub-tree model shown in Fig. 6 can be built based on the updated labels of all alarm data.

Of course, the above examples all show that there is a strong correlation among alarm data. If there is no strong correlation among alarm data, that is, the cosine similarity is less than the similarity normalization threshold, the label of each alarm data may be updated in the following way. For example, assuming that there is no strong correlation between alarm data A and alarm data C in the alarm correlation of A and C, there are strong correlations in the alarm correlation of A and B and the alarm correlation of C and B, the probability that alarm data A is a parent node of alarm data B is 53%, and the probability that alarm data B is a parent node of alarm data C is 85%, then the labels of alarm data A and alarm data C which have no strong correlation may both be marked as child nodes in the above way. Of alarm data A and alarm data B, alarm data A is a parent node and alarm data B is a child node, and of alarm data B and alarm data C, alarm data B is a parent node and alarm data C is a child node. Because the label of alarm data A is updated as a child node, and the probability that alarm data A is a parent node of alarm data B is 53%, the probability that alarm data B is a parent node of alarm data A is 47%. The label of alarm data B may be updated as a parent node, that is, alarm data B may be taken as a parent node, and alarm data A and C may be taken as child nodes, such that the sub-tree model shown in Fig. 7 can be built.

After the sub-tree models are built for the above-mentioned different situations, a tree model can be built according to the built sub-tree models, that is, the growth of the tree model can be achieved.

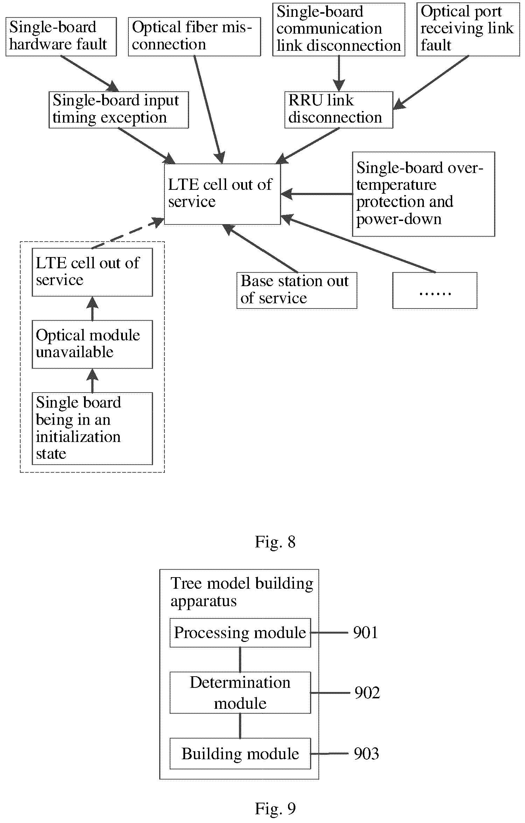

Similarly, the following different situations may present in the process of building the tree model. For example, in the case where a parent node of a sub-tree model presents in an original tree model, a node in the original tree model which is the same as the parent node of the sub-tree model may be used as a target node, and the sub-tree model may be mounted to the target node of the original tree model. As shown in Fig. 8, assuming that the built sub-tree model is as shown in the dotted box, the parent node of the built sub-tree model is an LTE cell out of service, and there is the same node as the parent node "LTE cell out of service" in the original tree model, then "LTE cell out of service" in the original tree model is used as a target node, and the sub-tree model in the dotted box is mounted to the node "LTE cell out of service" in the original tree model so as to achieve the growth of the tree model.

In another situation, in the case where the parent node of the sub-tree model does not present in the original tree model, and therefore the sub-tree model cannot be mounted to the original tree model, the label of each alarm data in the sub-tree model may be updated according to the probability corresponding to the alarm correlation to which each alarm data belongs. For example, the updating may be performed according to the above listed way for updating the label of each alarm data, and a sub-tree model may be rebuilt according to the updated label of each alarm data until a parent node of the rebuilt sub-tree model presents in the original tree model. In this way, a node in the original tree model which is the same as the parent node of the rebuilt sub-tree model may be used as a target node, and the rebuilt sub-tree model can be mounted to the target node of the original tree model to achieve the growth of the tree model.

Fig. 9 shows a tree model building apparatus provided by an embodiment of the present disclosure. As shown in Fig. 9, the apparatus includes a processing module 901, a determination module 902 and a building module 903.

The process module is configured to preprocess alarm data to obtain a vectorized alarm correlation set.

The process module is further configured to normalize a first feature of each alarm correlation in the vectorized alarm correlation set.

The determination module is configured to determine a label of each alarm data in the set according to the vectorized alarm correlation set, the normalized first feature and a classification model.

The classification model is obtained through training.

The first feature may include at least one of an alarm topology relationship, an alarm service relationship, an alarm level, an alarm network relationship, an alarm cosine similarity, an alarm support, or an alarm confidence.

The building module is configured to build a tree model according to the label of each alarm data in the set.

In an embodiment, the processing module is configured to mine alarm data to obtain an alarm correlation alternative set, one-hot encode the alarm data in the alarm correlation alternative set, and train an alarm vector neural network according to the one-hot encoded alarm data, to obtain a vectorized alarm correlation set.

In an embodiment, the normalization process of the processing module may be as follows: in the case where the first feature includes at least one of an alarm topology relationship, an alarm service relationship, an alarm level or an alarm network relationship, at least one of the alarm topology relationship, the alarm service relationship, the alarm level or the alarm network relationship of each alarm correlation is normalized according to an actual network structure; and/or
in the case where the first feature includes at least one of an alarm support, an alarm confidence or an alarm cosine similarity, at least one of the alarm support, the alarm confidence or the alarm cosine similarity of each alarm correlation is normalized according to a normalization threshold.

The alarm support, the alarm confidence and the alarm cosine similarity may correspond to respective normalization thresholds.

In an embodiment, the determination module may be configured to determine a probability and a cosine similarity corresponding to each alarm correlation according to the vectorized alarm correlation set, the normalized first feature and the classification model.

The probability is configured to indicate the probability that any one alarm data is a parent node of the other alarm data in a corresponding correlation, and the cosine similarity is configured to indicate the magnitude of correlation between any one alarm data and the other alarm data in the corresponding alarm correlation.

In the case where the cosine similarity is greater than or equal to a similarity normalization threshold, and the probability of the corresponding alarm correlation is greater than a preset value, the determination module may be configured to mark a label of any one alarm data in the corresponding alarm correlation as a parent node, and a label of the other alarm data as a child node; and in the case where the cosine similarity is less than the similarity normalization threshold, the determination module may be configured to mark both the label of any one alarm data and the label of the other alarm data in the corresponding alarm correlation as child nodes.

In an embodiment, the building module may be configured to build a sub-tree model according to the label of each alarm data in the case where the labels of the alarm data are not in conflict; or
update the label of each alarm data according to the probability corresponding to the alarm correlation to which each alarm data belongs in the case where the labels of the alarm data are in conflict, and build a sub-tree model according to the updated label of each alarm data; and
build a tree model according to the sub-tree model.

In some examples, an implementation of the tree model may include, but is not limited to, the following ways:
in the case where a parent node of a sub-tree model presents in the original tree model, a node in the original tree model which is the same as the parent node of the sub-tree model is used as a target node, and the sub-tree model is mounted to the target node of the original tree model; or
in the case where the parent node of the sub-tree model does not present in the original tree model, the label of each alarm data in the sub-tree model is updated according to the probability corresponding to the alarm correlation to which each alarm data in the sub-tree model belongs;
a sub-tree model is rebuilt according to the updated label of each alarm data until a parent node of the rebuilt sub-tree model presents in the original tree model; and
a node in the original tree model which is the same as the parent node of the rebuilt sub-tree model is used as a target node, and the rebuilt sub-tree model is mounted to the target node of the original tree model.

The tree model building apparatus provided by this embodiment is used to realize the tree model building method in the embodiment shown in FIG. 1, and has similar implementation principle and technical effect, which will not be repeated here.

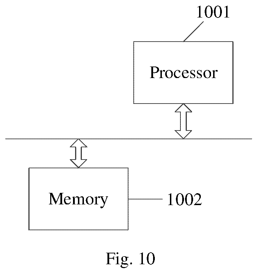

Fig. 10 is a schematic structural diagram of a device provided by an embodiment. As shown in Fig. 10, the device includes a processor 1001 and a memory 1002. There may be one or more processors 1001 in the device, and one processor 1001 is taken as an example in Fig. 10. The processor 1001 and the memory 1002 in the device may be connected by a bus or other means, and the bus connection is taken as an example in Fig. 10.

As a computer-readable storage medium, the memory 1002 may be configured to store software programs, computer executable programs and modules, such as program instructions/modules corresponding to the tree model building method in the embodiment in Fig. 1 of the present disclosure (for example, the processing module 901, the determination module 902 and the building module 903 in the tree model building apparatus). The processor 1001 implements the above tree model building method by executing software programs, instructions and modules stored in the memory 1002.

The memory 1002 may mainly include a program storage area and a data storage area. The program storage area may store an operating system, and an application program required for at least one function. The data storage area may store data, and the like created according to the use of a set-top box. In addition, the memory 1002 may include a high-speed random access memory, and may further include nonvolatile memory, such as at least one magnetic disk storage device, flash memory device, or other nonvolatile solid state storage device.

An embodiment of the present disclosure provides a readable/writable storage medium configured for computer storage. The storage medium stores one or more programs, which when executed by one or more processors, cause the one or more processors to implement a tree mode building method. The method includes:
preprocessing alarm data to obtain a vectorized alarm correlation set;
normalizing a first feature of each alarm correlation in the vectorized alarm correlation set;
determining a label of each alarm data in the set according to the vectorized alarm correlation set, the normalized first feature and a classification model;
where the classification model is obtained through training; and
building a tree model according to the label of each alarm data in the set.

Embodiments of the present disclosure provide a tree model building method and apparatus, a device and a storage medium. The method includes: preprocessing alarm data to obtain a vectorized alarm correlation set; normalizing a first feature of each alarm correlation in the vectorized alarm correlation set; determining a label of each alarm data in the set according to the vectorized alarm correlation set, the normalized first feature and a classification model obtained through training; and building a tree model according to the label of each alarm data in the set. In this way, a primary-secondary relationship among alarms can be expressed by the tree model, and the alarm data can be learned and analyzed based on the classification model obtained through training, to generate a corresponding tree model dynamically, thus achieving a continuous growth of the tree model.

As will be understood by those having ordinary skills in the art that all or some of the steps, and functional modules/units in the devices disclosed above may be implemented as software, firmware, hardware and appropriate combinations thereof.

In the hardware implementation, the division between functional modules/units mentioned in the above description does not necessarily correspond to the division of physical components. For example, a physical component may have multiple functions, or a function or step may be cooperatively performed by multiple physical components. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those having ordinary skills in the art, the term computer storage medium includes volatile and nonvolatile, removable and non-removable media implemented in any method or technology for storing information such as computer readable instructions, data structures, program modules or other data. A computer storage medium may include RAMs, ROMs, EEPROMs, flash memories or other memory technologies, CD-ROMs, digital versatile disks (DVDs) or other optical disk storages, magnetic cassettes, magnetic tapes, magnetic disk storages or other magnetic storage devices, or any other media that can be used to store desired information and can be accessed by a computer. In addition, it is well known to those having ordinary skills in the art that the communication medium may generally include computer readable instructions, data structures, program modules or other data in a modulated data signal such as a carrier wave or other transmission mechanism, and may include any information delivery medium.

Some embodiments of the present disclosure are described above with reference to the drawings, and these embodiments are not intended to limit the protection scope of the present disclosure. Any modification, equivalent replacement, and improvement made by those having ordinary skills in the art without departing from the scope of the present disclosure shall fall within the protection scope of the present disclosure.

## Claims

1. A tree model building method, comprising:
preprocessing alarm data to obtain a vectorized alarm correlation set;
normalizing a first feature of each alarm correlation in the vectorized alarm correlation set;
determining a label of each alarm data in the set according to the vectorized alarm correlation set, normalized first feature and a classification model;
wherein the classification model is obtained through training; and
building a tree model according to the label of each alarm data in the set.

2. The method of claim 1, wherein preprocessing alarm data to obtain a vectorized alarm correlation set comprises:
mining the alarm data to obtain an alarm correlation alternative set;
one-hot encoding the alarm data in the alarm correlation alternative set; and
training an alarm vector neural network according to the one-hot encoded alarm data, to obtain a vectorized alarm correlation set.

3. The method of claim 1, wherein the first feature comprises at least one of:
an alarm topology relationship, an alarm service relationship, an alarm level, an alarm network relationship, an alarm cosine similarity, an alarm support or an alarm confidence.

4. The method of claim 3, wherein normalizing a first feature of each alarm correlation in the vectorized alarm correlation set comprises:
in response to the first feature comprising at least one of an alarm topology relationship, an alarm service relationship, an alarm level or an alarm network relationship, normalizing at least one of the alarm topology relationship, the alarm service relationship, the alarm level or the alarm network relationship of each alarm correlation according to an actual network structure; and/or
in response to the first feature comprising at least one of an alarm support, an alarm confidence or an alarm cosine similarity, normalizing at least one of the alarm support, the alarm confidence or the alarm cosine similarity of each alarm correlation according to a normalization threshold,
wherein the alarm support, the alarm confidence and the alarm cosine similarity correspond to respective normalization thresholds.

5. The method of any one of claims 1 to 4, wherein determining a label of each alarm data in the set according to the vectorized alarm correlation set, the normalized first feature and a classification model comprises:
determining a probability and a cosine similarity corresponding to each alarm correlation according to the vectorized alarm correlation set, the normalized first feature and the classification model;
wherein the probability is configured to indicate the probability that any one alarm data is a parent node of the other alarm data in a corresponding alarm correlation, and the cosine similarity is configured to indicate a magnitude of correlation between any one alarm data and the other alarm data in the corresponding alarm correlation;
in response to the cosine similarity being greater than or equal to a similarity normalization threshold, and the probability of the corresponding alarm correlation being greater than a preset value, marking a label of any one alarm data in the corresponding alarm correlation as a parent node, and marking a label of the other alarm data as a child node; and
in response to the cosine similarity being less than the similarity normalization threshold, marking both the label of any one alarm data and the label of the other alarm data in the corresponding alarm correlation as child nodes.

6. The method of claim 1, wherein building a tree model according to the label of each alarm data in the set comprises:
in response to the labels of the alarm data being not in conflict, building a sub-tree model according to the label of each alarm data; or
in response to the labels of the alarm data being in conflict, updating the label of each alarm data according to the probability corresponding to the alarm correlation to which each alarm data belongs, and building a sub-tree model according to the updated label of each alarm data; and
building a tree mode according to the sub-tree model.

7. The method of claim 6, wherein building a tree model according to the sub-tree model comprises:
in response to a presence of a parent node of the sub-tree model in an original tree model, using a node in the original tree model which is the same as the parent node of the sub-tree model as a target node, and mounting the sub-tree model to the target node of the original tree model; or
in response to an absence of the parent node of the sub-tree model in the original tree model, updating the label of each alarm data in the sub-tree model according to the probability corresponding to the alarm correlation to which each alarm data in the sub-tree model belongs;
rebuilding a sub-tree model according to the updated label of each alarm data until the parent node of the rebuilt sub-tree model presents in the original tree model; and
using the node in the original tree model which is the same as the parent node of the sub-tree model as a target node, and mounting the sub-tree model to the target node of the original tree model.

8. A tree model building apparatus, comprising:
a process module configured to preprocess alarm data to obtain a vectorized alarm correlation set, and
further configured to normalize a first feature of each alarm correlation in the vectorized alarm correlation set;
a determination module configured to determine a label of each alarm data in the set according to the vectorized alarm correlation set, the normalized first feature and a classification model,
wherein the classification model is obtained through training; and
a building module configured to build a tree model according to the label of each alarm data in the set.

9. A device, comprising a memory, a processor, a program stored in the memory and executable by the processor, and a data bus configured to implement connection and communication between the processor and the memory, wherein the program, when executed by the processor, causes the processor to perform the tree model building method of any one of claims 1 to 7.

10. A readable/writable storage medium configured for computer storage, wherein the storage medium stores one or more programs which, when executed by one or more processors, cause the one or more processors to perform the tree model building method of any one of claims 1 to 7.
